# EUROPÄISCHE PATENTSCHRIFT

(11) **EP 1 375 268 B1**
(45) Veröffentlichungstag und Bekanntmachung des Hinweises auf die Patenterteilung: **22.03.2006**
(21) Anmeldenummer: 03011021.7
(22) Anmeldetag: 19.05.2003
(51) Int. Cl.: B60R 22/195

(54) **Schlossstraffer**
Buckle retractor
Rétracteur de boucle

(30) Priorität: 27.06.2002 DE 20209965 U
(43) Veröffentlichungstag der Anmeldung: 02.01.2004
(73) Patentinhaber: TRW Automotive GmbH, 73553 Alfdorf (DE)
(72) Erfinder: Biller, Joachim, 73547 Lorch (DE); Heilig, Alexander, 73550 Wissgoldingen (DE)
(74) Vertreter: Strass, Jürgen

(56) Entgegenhaltungen:
- EP-A- 0 655 371
- EP-A- 0 672 564
- DE-A- 19 941 435
- DE-A- 19 961 799
- DE-C- 10 027 599

## Beschreibung

Die Erfindung betrifft einen Schloßstraffer zum Vorstraffen eines Sicherheitsgurtbandes mit einem an einem Gurtschloß angreifenden Zugübertragungsmittel, einem Motor und einer mittels des Motors komprimierbaren Druckspeichereinrichtung.

Ein solcher Schloßstraffer ist aus der DE 199 61 799 bekannt. Bei diesem reversiblen Schloßstraffer sorgt ein elektromotorischer Antrieb bei einem drohenden Unfall für eine Vorstraffung des Sicherheitsgurtbandes, indem ein an ein Gurtschloß gekoppelter Kolben des Strafferantriebs in eine Zwischenposition gebracht wird. Erfolgt kein Zusammenstoß, wird der Kolben durch eine Druckfeder in seine Ausgangsposition zurückgebracht, so daß sich das Gurtschloß wieder in seiner Normalposition befindet.

Die Erfindung schafft einen Schloßstraffer, der eine zuverlässige, reversible Vorstraffung mit kostengünstigen Komponenten ermöglicht. Gemäß der Erfindung ist vorgesehen, daß das Zugübertragungsmittel kraftschlüssig an die Druckspeichereinrichtung gekoppelt ist und die Druckspeichereinrichtung so angeordnet ist, daß eine Expansion der Druckspeicherinrichtung ein Wegziehen des Gurtschlosses zur Straffung des Sicherheitsgurtbandes bewirkt. Im Gegensatz zu dem bekannten Schloßstraffer wird der Motor nicht für den eigentlichen Vorstraffvorgang eingesetzt, sondern dient zur vorherigen Komprimierung der Druckspeichereinrichtung. Für den Vorstraffvorgang wird die Expansion der Druckspeichereinrichtung genutzt. Da die Komprimierung der Druckspeichereinrichtung zeitunkritisch ist und nur ggf. nach einem erfolgten Vorstraffvorgang wiederholt werden muß, kann hierfür ein einfacher Motor verwendet werden. Einzige Voraussetzung ist, daß der Motor das zur Komprimierung der Druckspeichervorrichtung erforderliche Drehmoment bereitstellt. Die Druckspeichereinrichtung umfaßt vorzugsweise eine Schraubenfeder, es kann aber auch eine Druckspeichereinrichtung mit einem kompressiblen Fluid (pneumatischer oder hydraulischer Druckspeicher) verwendet werden.

Der Motor ist vorzugsweise selbstblockierend ausgebildet, so daß nach der Komprimierung der Druckspeichereinrichtung durch den Motor keine weiteren Maßnahmen notwendig sind, um die Druckspeichereinrichtung in ihrem komprimierten Zustand zu halten. Alternativ kann die Druckspeichereinrichtung jedoch auch durch eine Blockiereinrichtung im komprimierten Zustand gehalten werden.

Bei der bevorzugten Ausführungsform der Erfindung wird die Expansion der Druckspeichereinrichtung über eine durch den Motor aktivierbare Auslöseeinrichtung hervorgerufen. Somit hat der Motor eine Doppelfunktion: Zum einen wird er zur Komprimierung der Druckspeichereinrichtung eingesetzt, um den Schloßstraffer in den betriebsbereiten Zustand zu versetzen, zum anderen aktiviert er bei Bedarf in einer Precrash-Situation die Auslöseeinrichtung. Dies erspart zusätzliche Komponenten, die ansonsten für die Auslösung des Vorstraffvorgangs erforderlich wären.

Vorzugsweise wird die Druckspeichereinrichtung über eine durch den Motor angetriebene, längsverschiebliche erste Zahnstange komprimiert. Gemäß der bevorzugten Ausführungsform der Erfindung ist der Motor an ein Ritzel gekoppelt, das in eine erste Verzahnung der ersten Zahnstange eingreift, wobei die Zahnstange durch Aktivierung der Auslöseeinrichtung außer Eingriff mit dem Ritzel gebracht wird. So kann die komprimierte Druckspeichereinrichtung auf einfache Weise zur Durchführung des Vorstraffvorgangs freigegeben werden.

Ein besonderer Vorteil ergibt sich dadurch, daß die Auslöseeinrichtung ein auf der ersten Zahnstange verschieblich gehaltenes Auslöseteil umfaßt, das an eine zweite Zahnstange gekoppelt ist, deren Verzahnung komplementär zu einer zweiten Verzahnung der ersten Zahnstange ausgebildet ist, wobei die zweite Verzahnung der ersten Zahnstange bei Aktivierung der Auslöseeinrichtung in Eingriff mit der Verzahnung der zweiten Zahnstange gebracht wird und die Zahnstangen so angeordnet und das Profil der Verzahnungen der Zahnstangen so ausgebildet sind, daß eine relative Verschiebung der zweiten Zahnstange gegenüber der ersten Zahnstange die erste Verzahnung der ersten Zahnstange wieder in Eingriff mit dem Ritzel bringt. Eine solche Konstruktion ermöglicht es, nach einem Vorstraffvorgang den Straffermechanismus auf einfache Weise in einen Zustand zurückzuversetzen, in dem die Druckspeichereinrichtung erneut komprimiert werden kann, so daß der Schloßstraffer für einen weiteren Vorstraffvorgang zur Verfügung steht.

Für die auf die Vorstraffung folgende Notfall-Straffung bei einem tatsächlichen Unfall ist gemäß einer Weiterbildung der Erfindung eine pyrotechnische Einrichtung vorgesehen, die so an den Schloßstraffer gekoppelt ist, daß durch die pyrotechnische Einrichtung eine weitergehende Straffung als die durch die Expansion der Druckspeichereinrichtung erreichte Straffung erzielt wird.

Weitere Merkmale und Vorteile der Erfindung ergeben sich aus der folgenden Beschreibung und aus den beigefügten Zeichnungen, auf die bezug genommen wird. In den Zeichnungen zeigen:
- Figur 1 eine seitliche Schnittansicht eines erfindungsgemäßen Schloßstraffers;
- Figur 2 eine vergrößerte Schnittansicht des Straffers aus Figur 1 entlang der Linie A-A;
- Figuren 3a-3f geschnittene Teilansichten des Schloßstraffers aus Figur 1 in verschiedenen Phasen der Schloßstraffung; und
- Figur 4 eine seitliche Schnittansicht einer Weiterbildung des erfindungsgemäßen Schloßstraffers.

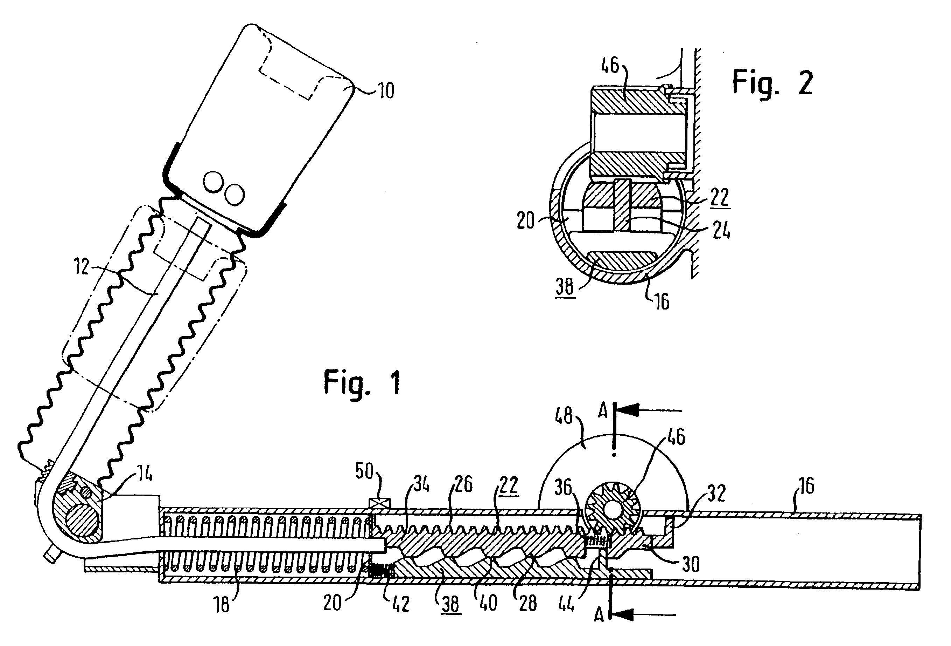

Der in Figur 1 dargestellte Schloßstraffer umfaßt ein Gurtschloß 10, an dessen unteres Ende ein erstes Ende eines steifen Zugseils 12 gekoppelt ist. Das schräg nach unten verlaufende Zugseil 12 ist über eine Umlenkeinrichtung 14 in eine horizontale Richtung parallel zum Fahrzeugboden geführt. In dieser horizontalen Richtung schließt sich an die Umlenkeinrichtung 14 ein langgestrecktes, zylindrisches Rohr 16 an, in das das Zugseil 12 hineingeführt ist. An dem der Umlenkeinrichtung 14 zugewandten vorderen Ende des Rohrs 16 stützt sich das vordere Ende einer Schraubenfeder 18 ab, die kraftschlüssig an das Zugseil 12 gekoppelt ist. Das hintere Ende der Schraubenfeder 18 stützt sich an einem Stützring 20 ab, der fest mit einer im Rohr 16 angeordneten ersten Zahnstange 22 verbunden ist. Bei einer alternativen Ausführungsform ist der Stützring 20 einteilig mit der Zahnstange 22 ausgebildet.

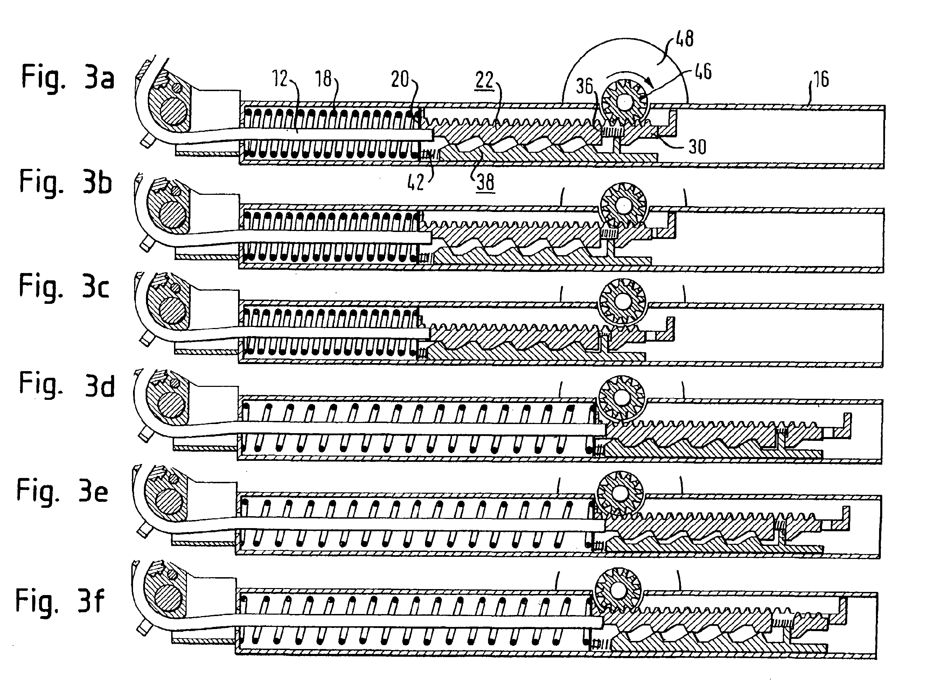

Die erste Zahnstange 22 ist sowohl längsverschieblich als auch vertikal beweglich im Rohr gehalten. Ein Mittelteil 24 der ersten Zahnstange 22 (siehe Figur 2) hat eine obere und eine untere Verzahnung, wobei die oberen Zähne 26 eng beabstandet sind und ein symmetrisches Profil aufweisen, wogegen die unteren Zähne 28 weiter beabstandet sind und ein asymmetrisches Profil mit einer steil ansteigenden Flanke auf der einen Seite und einer flach abfallenden Flanke auf der anderen Seite aufweisen. Ein hinterer Abschnitt des verzahnten Mittelteils 24 (im folgenden als Auslöseteil 30 bezeichnet) ist längsverschieblich zwischen einem Endstück 32 der ersten Zahnstange 22 und dem vorderen Abschnitt 34 des Mittelteils 24 gehalten und durch eine erste Spiralfeder 36 zum Endstück 32 hin vorgespannt. Unterhalb der ersten Zahnstange 22 ist eine zweite Zahnstange 38 mit einer nach oben weisenden Verzahnung angeordnet, deren Zähne 40 komplementär zu den unteren Zähnen 28 der ersten Zahnstange 22 ausgebildet sind. Das dem Stützring 20 zugewandte vordere Ende der zweiten Zahnstange 38 liegt an einer zweiten Spiralfeder 42 an, die sich auf der der Schraubenfeder 18 abgewandten Seite des Stützrings 20 abstützt. Ein sich nach oben erstreckender Fortsatz 44 im hinteren Bereich der zweiten Zahnstange 38 ragt zwischen den vorderen Abschnitt 34 des Mittelteils 24 und das Auslöseteil 30 der ersten Zahnstange 22. Das Auslöseteil 30 mit der ersten Spiralfeder 36 und die zweite Zahnstange 38 bilden zusammen eine Auslöseeinrichtung, deren Funktion weiter unten anhand der Figuren 3a-3f erläutert wird.

In die oberen Zähne 26 der ersten Zahnstange 22 greift ein Ritzel 46, das von einem Gleichstrommotor 48 angetrieben wird und drehfest an dessen Motorwelle gekoppelt ist. Somit kann die erste Zahnstange 22 in Längsrichtung verschoben' werden. An einer vorbestimmten Stelle am Rohr 16 ist ein Sensor 50 angeordnet, der ein Passieren des Stützrings 20 detektiert.

Nachfolgend wird anhand der Figuren 3a-3f die Funktionsweise des Schloßstraffers beschrieben. Um den in Figur 3a gezeigten Normalzustand des Schloßstraffers mit vorgespannter Schraubenfeder 18 zu erreichen, wird die erste Zahnstange 22 durch Drehung des Ritzels 46 im Uhrzeigersinn gegen die Kraft der Schraubenfeder 18 so weit nach links geschoben, bis der Sensor 50 das Passieren des Stützrings 20 registriert und der Motor 48 daraufhin abgeschaltet wird. Während des Vorspannens kämmen die beiden Zahnstangen 22, 38 nicht miteinander, sondern die unteren Zähne 28 der ersten Zahnstange 22 liegen auf den Zähnen 40 der zweiten Zahnstange 38 auf. Durch den am Auslöseteil 30 anliegenden Fortsatz 44 wird aber die zweite Zahnstange 38 mit der ersten Zahnstange 22 mitgeschoben. Nach Beendigung der Motorbewegung steht das Ritzel 46 nur mit den Zähnen 26 des Auslöseteils 30 in Eingriff. Die Zahnstangen 22, 38 verbleiben in der in Figur 3a gezeigten Position, da der Motor 48 blockiert und somit das unbewegliche Ritzel 46 ein Zurückschieben der ersten Zahnstange 22 verhindert. Alternativ kann auch eine Verriegelung des Stützrings 20, beispielsweise mittels einer in eine Ausnehmung des Rohrs 16 eingreifenden Klinke, vorgesehen sein.

Die Figuren 3b und 3c zeigen die Entriegelungsphase des Straffermechanismus vor einem drohenden Aufprall. Der Motor 48 dreht das Ritzel 46 im Uhrzeigersinn, bis das Auslöseteil 30 die zweite Zahnstange 38 gegen die Kraft der beiden Spiralfedern 36, 42 etwa um die halbe Breite eines Zahns 28 bzw. 40 nach links verschoben hat. Aus der durch das Ritzel 46 und die Schraubenfeder 18 auf die erste Zahnstange 22 übertragenen Kräfte ergibt sich auch eine nach unten gerichtete Kraftkomponente. Somit kann sich die erste Zahnstange 22 aufgrund der relativen Stellung der Zähne 28 und 40 zueinander so weit nach unten bewegen, bis die Zähne 28, 40 vollständig ineinander greifen und die erste Zahnstange 22 außer Eingriff mit dem Ritzel 46 steht.

Durch die so erfolgte Freigabe der ersten Zahnstange 22 kann sich die an das Zugseil 12 gekoppelte Schraubenfeder 18 schlagartig entspannen, so daß das Gurtschloß 10 schräg nach unten weggezogen wird. Wenn nach erfolgter Vorstraffung die beiden nach rechts verschobenen Zahnstangen 22, 38 die in Figur 3d gezeigte Endlage erreicht haben, drückt die zweite Spiralfeder 42 die zweite Zahnstange 38 weiter nach rechts. Aufgrund des speziellen Profils der Zähne 28 und 40 und des speziellen Mechanismus mit dem verschieblich gehaltenen Auslöseteil 30 und der ersten Spiralfeder 36, die einer Verschiebung der ersten Zahnstange 22 nach rechts entgegenwirkt, ergibt sich eine nach oben gerichtete Kraft auf die erste Zahnstange 22. Die erste Zahnstange 22 wird dadurch nach oben gedrückt, bis sie wieder in Eingriff mit dem Ritzel 46 steht und die unteren Zähne 28 den Zähnen 40 der zweiten Zahnstange 38 gegenüberliegen (siehe Figuren 3e und 3f). Durch erneute Drehung des Ritzels 46 im Uhrzeigersinn kann die Schraubenfeder 18 wieder gespannt und der Schloßstraffermechanismus wieder in die in Figur 3a gezeigte Ausgangsposition gebracht werden.

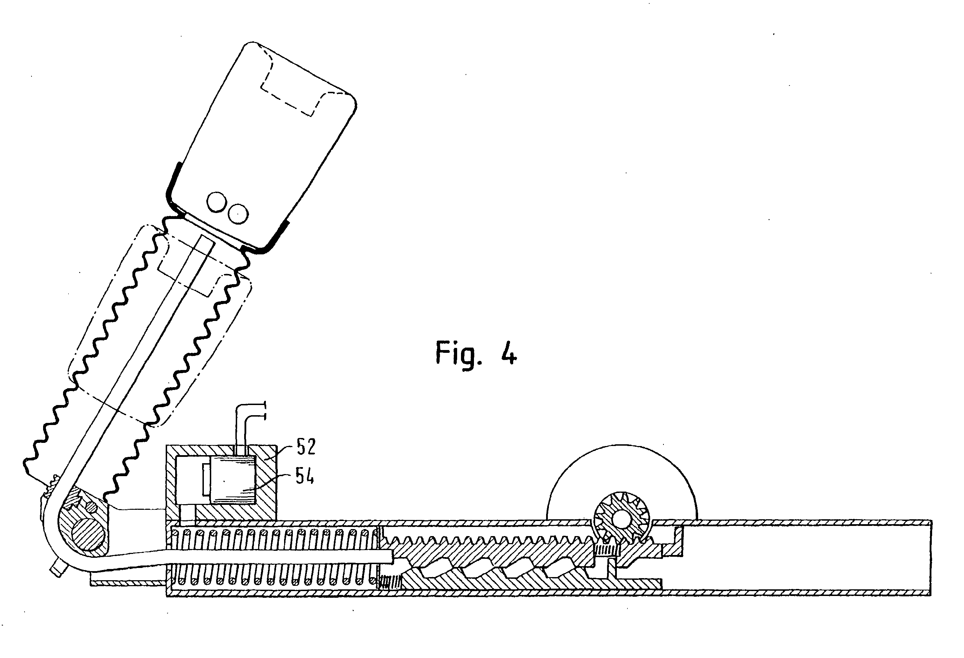

In Figur 4 ist eine Weiterbildung des erfindungsgemäßen Schloßstraffers dargestellt, bei der zusätzlich eine pyrotechnische Einrichtung 52 für die Notfall-Straffung vorgesehen ist. Kommt es nach der Vorstraffung tatsächlich zu einem schweren Aufprall, wird eine pyrotechnische Ladung 54 gezündet und das dadurch bereitgestellte und in das Rohr 16 eingeleitete Gas bewirkt eine zusätzliche Straffung, d.h. das Gurtschloß 10 wird weiter nach unten weggezogen.

Aus der obigen Beschreibung ist ersichtlich, daß als Motor 48 ein einfacher Bürstenmotor mit nur einer Drehrichtung verwendet werden kann. Alternativ zu der Schraubenfeder 18 kann auch ein pneumatischer oder hydraulischer Druckspeicher mit einem kompressiblen Fluid eingesetzt werden, wodurch die Funktionsweise des Straffermechanismus aber nicht verändert wird. Die in der Beschreibung verwendeten Begriffe "oben" und "unten" (z.B. obere und untere Zähne) sowie "links" und "rechts" wurden für eine anschauliche Beschreibung der bevorzugten Ausführungsformen gemäß der Figurendarstellung gewählt, sind aber keinesfalls einschränkend zu verstehen.

## Patentansprüche

1. Schloßstraffer zum Vorstraffen eines Sicherheitsgurtbandes, mit einem an einem Gurtschloß (10) angreifenden Zugübertragungsmittel (12), einem Motor (48) und einer mittels des Motors (48) komprimierbaren Druckspeichereinrichtung, **dadurch gekennzeichnet, daß** das Zugübertragungsmittel (12) kraftschlüssig an die Druckspeichereinrichtung gekoppelt ist und die Druckspeichereinrichtung so angeordnet ist, daß eine Expansion der Druckspeichereinrichtung ein Wegziehen des Gurtschlosses (10) zur Straffung des Sicherheitsgurtbandes bewirkt.

2. Schloßstraffer nach Anspruch 1, **dadurch gekennzeichnet, daß** die Druckspeichereinrichtung eine Schraubenfeder (18) umfaßt.

3. Schloßstraffer nach Anspruch 1, **dadurch gekennzeichnet, daß** die Druckspeichereinrichtung ein kompressibles Fluid umfaßt.

4. Schloßstraffer nach einem der vorhergehenden Ansprüche, **dadurch gekennzeichnet**, ein Sensor (50) vorgesehen ist, mit dem eine Endstellung der Druckspeichereinrichtung detektiert wird.

5. Schloßstraffer nach einem der vorhergehenden Ansprüche, **dadurch gekennzeichnet, daß** der Motor (48) selbstblockierend ausgebildet ist.

6. Schloßstraffer nach einem der Ansprüche 1 bis 4, **dadurch gekennzeichnet, daß** die Druckspeichereinrichtung durch eine Blockiereinrichtung im komprimierten Zustand gehalten wird.

7. Schloßstraffer nach Anspruch einem der vorhergehenden Ansprüche, **dadurch gekennzeichnet, daß** die Expansion der Druckspeichereinrichtung über eine durch den Motor (48) aktivierbare Auslöseeinrichtung (30, 36, 38) hervorgerufen wird.

8. Schloßstraffer nach einem der vorhergehenden Ansprüche, **dadurch gekennzeichnet, daß** die Druckspeichereinrichtung über eine durch den Motor (48) angetriebene, längsverschiebliche erste Zahnstange (22) komprimiert wird.

9. Schloßstraffer nach Anspruch 8, **dadurch gekennzeichnet, daß** der Motor (48) an ein Ritzel (46) gekoppelt ist, das in eine erste Verzahnung (26) der ersten Zahnstange (22) eingreift, wobei die erste Zahnstange (22) durch Aktivierung der Auslöseeinrichtung (30, 36, 38) außer Eingriff mit dem Ritzel (46) gebracht wird.

10. Schloßstraffer nach Anspruch 9, **dadurch gekennzeichnet, daß** die Auslöseeinrichtung ein auf der ersten Zahnstange (22) verschieblich gehaltenes Auslöseteil (30) umfaßt, das an eine zweite Zahnstange (38) gekoppelt ist, deren Verzahnung (40) komplementär zu einer zweiten Verzahnung (28) der ersten Zahnstange (22) ausgebildet ist, wobei die zweite Verzahnung (28) der ersten Zahnstange (22) bei Aktivierung der Auslöseeinrichtung in Eingriff mit der Verzahnung (40) der zweiten Zahnstange (38) gebracht wird und die Zahnstangen (22, 38) so angeordnet und das Profil der Verzahnungen (28, 40) der Zahnstangen (22, 38) so ausgebildet sind, daß durch eine relative Verschiebung der zweiten Zahnstange (38) gegenüber der ersten Zahnstange (22) die erste Verzahnung (26) der ersten Zahnstange (22) wieder in Eingriff mit dem Ritzel (46) gebracht wird.

11. Schloßstraffer nach einem der vorhergehenden Ansprüche, **dadurch gekennzeichnet, daß** eine pyrotechnische Einrichtung (52) für eine Notfall-Straffung des Sicherheitsgurtbandes vorgesehen ist, die so an den Schloßstraffer gekoppelt ist, daß durch die pyrotechnische Einrichtung (52) eine weitergehende Straffung als die durch die Expansion der Druckspeichereinrichtung erreichte Straffung erzielt wird.

## Claims

1. A buckle tensioner for pre-tensioning a safety belt webbing, comprising a traction transmission means (12) engaging a belt buckle (10), a motor (48), and a pressure storing device which is able to be compressed by means of the motor (48), **characterized in that** the traction transmission means (12) is coupled in a force-fitting manner to the pressure storing device and the pressure storing device is arranged such that an expansion of the pressure storing device causes the belt buckle (10) to be pulled away for tensioning the safety belt webbing.

2. The buckle tensioner according to Claim 1, **characterized in that** the pressure storing device comprises a helical spring (18).

3. The buckle tensioner according to Claim 1, **characterized in that** the pressure storing device comprises a compressible fluid.

4. The buckle tensioner according to any of the preceding claims, **characterized in that** a sensor (50) is provided, by which a final position of the pressure storing device is detected.

5. The buckle tensioner according to any of the preceding claims, **characterized in that** the motor (48) is constructed so as to be self-locking.

6. The buckle tensioner according to any of Claims 1 to 4, **characterized in that** the pressure storing device is held in the compressed state by a locking device.

7. The buckle tensioner according to any of the preceding claims, **characterized in that** the expansion of the pressure storing device is brought about by means of a trigger device (30, 36, 38) which can be activated by the motor (48).

8. The buckle tensioner according to any of the preceding claims, **characterized in that** the pressure storing device is compressed by means of a longitudinally displaceable first rack (22) which is driven by the motor (48).

9. The buckle tensioner according to Claim 8, **characterized in that** the motor (48) is coupled to a pinion (46) which engages into first teeth (26) of the first rack (22), the first rack (22) being brought out of engagement with the pinion (46) by activation of the trigger device (30, 36, 38).

10. The buckle tensioner according to Claim 9, **characterized in that** the trigger device comprises a trigger piece (30) which is held displaceably on the first rack (22) and is coupled to a second rack (38) the teeth (40) of which are constructed so as to be complementary to second teeth (28) of the first rack (22), the second teeth (28) of the first rack (22) being brought into engagement with the teeth (40) of the second rack (38) on activation of the trigger device, and the racks (22, 38) being arranged and the profiles of the teeth (28, 40) of the racks (22, 38) being constructed such that by a relative displacement of the second rack (38) with respect to the first rack (22), the first teeth (26) of the first rack (22) are brought into engagement with the pinion (46) again.

11. The buckle tensioner according to any of the preceding claims, **characterized in that** a pyrotechnic device (52) is provided for an emergency tensioning of the safety belt webbing, the device (52) being coupled to the buckle tensioner in such a way that by the pyrotechnic device (52) a tensioning is achieved that exceeds the tensioning obtained by the expansion of the pressure storing device.

## Revendications

1. Prétensionneur de boucle pour prétensionner une sangle de ceinture de sécurité, comportant un moyen de transmission de traction (12) s'appliquant sur une boucle de ceinture (10), un moteur (48) et un système d'accumulation de pression compressible au moyen du moteur (48), **caractérisé en ce que** le moyen de transmission de traction (12) est couplé par coopération de forces au système d'accumulation de pression, et le système d'accumulation de pression est agencé de telle sorte qu'une expansion du système d'accumulation de pression provoque un retrait de la boucle de ceinture (10) pour tendre la sangle de ceinture de sécurité.

2. Prétensionneur de boucle selon la revendication 1, **caractérisé en ce que** le système d'accumulation de pression comprend un ressort à boudin (18).

3. Prétensionneur de boucle selon la revendication 1, **caractérisé en ce que** le système d'accumulation de pression comprend un fluide compressible.

4. Prétensionneur de boucle selon l'une des revendications précédentes, **caractérisé en ce qu'**il est prévu un capteur (50) qui permet de détecter une position finale du système d'accumulation de pression.

5. Prétensionneur de boucle selon l'une des revendications précédentes, **caractérisé en ce que** le moteur (48) est réalisé à autoblocage.

6. Prétensionneur de boucle selon l'une des revendications 1 à 4, **caractérisé en ce que** le système d'accumulation de pression est maintenu par un système de blocage dans un état comprimé.

7. Prétensionneur de boucle selon l'une des revendications précédentes, **caractérisé en ce que** l'expansion du système d'accumulation de pression est provoquée par l'intermédiaire d'un système de déclenchement (30, 36, 38) qui peut être activé par le moteur (48).

8. Prétensionneur de boucle selon l'une des revendications précédentes, **caractérisé en ce que** le système d'accumulation de pression est comprimé par une première crémaillère (22) déplaçable en translation et entraînée par le moteur (48).

9. Prétensionneur de boucle selon la revendication 8, **caractérisé en ce que** le moteur (48) est couplé à un pignon (46) qui s'engage dans une première denture (26) de la première crémaillère (22), la première crémaillère étant mise hors d'engagement d'avec le pignon (46) lorsque le système de déclenchement (30, 36, 38) est activé.

10. Prétensionneur de boucle selon la revendication 9, **caractérisé en ce que** le système de déclenchement comprend une partie de déclenchement (30) maintenu en déplacement sur la première crémaillère (22), laquelle est couplée à une deuxième crémaillère (38) dont la denture (40) est réalisée complémentaire à une deuxième denture (28) de la première crémaillère (22), la deuxième denture (28) de la première crémaillère (22) étant mise en engagement avec la denture (40) de la deuxième crémaillère (38) lorsque le système de déclenchement est activé, et les crémaillères (22, 38) étant agencées de telle sorte et le profil des dentures (28, 40) étant réalisé de telle sorte que par un déplacement relatif de la deuxième crémaillère (38) par rapport à la première crémaillère (22), la première denture (26) de la première crémaillère peut être de nouveau mise en engagement avec le pignon (46).

11. Prétensionneur de boucle selon l'une des revendications précédentes, **caractérisé en ce qu'**il est prévu un système pyrotechnique (52) pour un tensionnement d'urgence de la sangle de ceinture de sécurité, qui est couplé de telle sorte au prétensionneur de boucle que grâce au système pyrotechnique (52), on obtient un tensionnement plus important que le tensionnement obtenu au moyen de l'expansion du système d'accumulation de pression.
